# EUROPEAN PATENT APPLICATION

(11) **EP 3 708 245 A1**
(43) Date of publication of application: **16.09.2020**
(21) Application number: 18847352.4
(22) Date of filing: 13.08.2018
(51) Int. Cl.: B01F 5/02, B01F 3/04, A61L 101/10, A61L 9/14

(54) **DEVICE AND METHOD FOR MANUFACTURING ULTRASONICALLY ATOMIZED OZONE WATER**

(30) Priority: 22.08.2017 CN 201710728741
(71) Applicant: GRN Consultant (Hong Kong) Limited, Fanling, Hong Kong (CN)
(72) Inventor: CHAN, Chi Kwong, Fanling Hong Kong (CN); WONG, Alan Yuk Chun, Fanling Hong Kong (CN)
(74) Representative: Herrmann, Jochen
(86) International application number: PCT/CN2018/100275
(87) International publication number: WO 2019/037616

(57) **Abstract**

**Summary**

The present invention provides a device and a method for producing atomized ozonated water by ultrasound and is related to the field of environmental management. The device for producing atomized ozonated water by ultrasound comprises an ozone generator, an ultrasonic atomizer, and a first pipeline. The ozone generator and the ultrasonic atomizer are connected by the first pipeline. In particular, the ozone generator is used to receive oxygen from an oxygen generation system and convert oxygen into ozone, and then feed the ozone into the ultrasonic atomizer through the first pipeline. The ultrasonic atomizer is used to either atomize water by ultrasonic technology before it is mixed with the ozone from the ozone generator to form atomized ozonated water, or atomize ozonated water, which is formed by dissolving ozone in water, to form atomized ozonated water by ultrasonic technology. The present invention can provide a cleansing element for air purification, dissolution of chemical gases and assurance of environmental hygiene.

## Description

### Field

The present invention relates to the field of environmental management, and in particular to a device and a method for producing atomized ozonated water by ultrasound.

### Background technology

With the development of society, environmental pollution is becoming more and more serious, and odor is one of the environmental problems that directly affects public health.

Currently, environmental disinfection is mostly carried out by using chemicals in a sterilization device or spraying disinfectant by vehicles. However, these methods are not only costly but also produce by-products after disinfection, causing secondary harmful effect to the environment and human.

### The present invention

The present invention aims to provide a device and a method for producing atomized ozonated water by ultrasound, which provide a cleansing element for air purification, dissolution of chemical gases and assurance of environmental hygiene.

Embodiments of the present invention are implemented as follows:
Firstly, an embodiment of the present invention provides a device for producing atomized ozonated water by ultrasound, which comprises an ozone generator, an ultrasonic atomizer, and a first pipeline. The said ozone generator and the said ultrasonic atomizer are connected by the said first pipeline. The said ozone generator is used to receive oxygen from an oxygen generation system and convert the said oxygen into ozone, and then feed the ozone into the said ultrasonic atomizer through the said first pipeline. The said ultrasonic atomizer is used to either atomize water before it is mixed with the ozone from the said ozone generator to form atomized ozonated water, or atomize ozonated water, which is formed by dissolving ozone in water, to form atomized ozonated water by ultrasonic technology.

In a preferred embodiment of the present invention, the said device for producing atomized ozonated water by ultrasound also comprises a first water supply device and a second pipeline. The said first water supply device and the said ultrasonic atomizer are connected by the said second pipeline. The said first water supply device is used to supply water to the said ultrasonic atomizer, such that the said water is atomized by the said ultrasonic atomizer before it is mixed it with the ozone from the said ozone generator to form atomized ozonated water.

In a preferred embodiment of the present invention, the said device for producing atomized ozonated water by ultrasound also comprises a second water supply device and a third pipeline. The said second water supply device and the said ozone generator are connected by the said third pipeline. The said second water supply device is used to supply water to the said ozone generator, such that the said ozone dissolves in the said water to form ozonated water and then atomized by the said ultrasonic atomizer to form atomized ozonated water.

In a preferred embodiment of the present invention, the said device for producing atomized ozonated water by ultrasound also comprises a pressurizing device and a fourth pipeline. The said pressurizing device and the said ozone generator are connected by the said fourth pipeline. The pressurizing device is used to increase pressure in the said ozone generator, such that the said ozone is fed into the said ultrasonic atomizer to form atomized ozonated water by the said ultrasonic atomizer.

In a preferred embodiment of the present invention, the said device for producing atomized ozonated water by ultrasound also comprises a reaction chamber and a fifth pipeline. The said reaction chamber is connected with the said ultrasonic atomizer and the said ozone generator by the fifth pipeline. The said reaction chamber provides a space for the said ultrasonic atomizer to atomize the said ozone.

In a preferred embodiment of the present invention, the said device for producing atomized ozonated water by ultrasound also comprises a spraying device and a sixth pipeline. The said spraying device and the said ultrasonic atomizer are connected by the said sixth pipeline. The said spraying device is used to spray the atomized ozonated water from the said ultrasonic atomizer for environmental purification.

In a preferred embodiment of the present invention, the said spraying device is a fix-mounted spraying device or a mobile pipes-spraying device.

In a preferred embodiment of the present invention, the said device for producing atomized ozonated water by ultrasound also comprises an ultraviolet lamp. The said ultraviolet lamp is configured on the outside of the said ultrasonic atomizer to produce ultraviolet light, which reacts with the said atomized ozonated water to produce hydroxyl radicals for decomposition of toxic substances.

In a preferred embodiment of the present invention, the said device for producing atomized ozonated water by ultrasound also comprises a cooling device. The said cooling device is configured inside the said ultrasonic atomizer. The said cooling system is used to cool down the said water or the said ozonated water.

Secondly, an embodiment of the present invention provides a method for producing atomized ozonated water by ultrasound, which is applied in a device for producing atomized ozonated water by ultrasound. The said device for producing atomized ozonated water by ultrasound comprises an ozone generator, an ultrasonic atomizer, and a first pipeline. The said ozone generator and the said ultrasonic atomizer are connected by the said first pipeline. The said method comprises:
The said ozone generator receiving oxygen from an oxygen generation system; the said ozone generator converting the said oxygen into ozone and feeding it to the said ultrasonic atomizer through the said first pipeline; the said ultrasonic atomizer either atomizing water by ultrasonic technology before it is mixed with the said ozone from the said ozone generator to form atomized ozonated water, or atomizing ozonated water, which is formed by dissolving ozone in water, to form atomized ozonated water by ultrasonic technology.

An embodiment of the present invention provides a device and a method for producing atomized ozonated water by ultrasound, which comprises an ozone generator, an ultrasonic atomizer, and a first pipeline. The ozone generator and the ultrasonic atomizer are connected by the first pipeline. By using the ozone generator to receive oxygen from the oxygen generation system, convert the oxygen into ozone, and feed the ozone into the ultrasonic atomizer through the first pipeline; and by using the ultrasonic atomizer either to atomize water by ultrasonic technology before it is mixed with the ozone from the ozone generator to form atomized ozonated water, or atomize ozonated water, which is formed by dissolving ozone in water, to form atomized ozonated water by ultrasonic technology, a cleansing element is provided for air purification, dissolution of chemical gases and assurance of environmental hygiene.

Other features and advantages of the present invention will be explained in the following description. Some will become obvious from the description or could be understood by implementing the present invention. The objectives and other advantages of the present invention can be achieved and obtained through the structure specifically set out in the specification, claims, and drawings.

### Description of Drawings

In order to more clearly illustrate the technical solutions in the embodiments of the present invention, a brief description of the drawings required for the embodiments is set out below. It should be understood that the drawings illustrate only certain embodiments of the present invention. Therefore, they should not be regarded as limiting the scope of the present invention. Ordinary persons skilled in the art may, without input of creative efforts, obtain other drawings according to these drawings. Through the drawings, the said objectives of the present invention and other objects, features and advantages will become clearer. In all of the drawings, the same reference marks indicate the same parts. The drawings are not drawn to scale; they are only intended to illustrate the crux of the present invention.
FIG. 1 is the first block diagram of the device for producing atomized ozonated water by ultrasound provided by the first embodiment of the present invention.
FIG. 2 is the second block diagram of the device for producing atomized ozonated water by ultrasound provided by the first embodiment of the present invention.
FIG. 3 is the third block diagram of the device for producing atomized ozonated water by ultrasound provided by the first embodiment of the present invention.
FIG. 4 the fourth block diagram of the device for producing atomized ozonated water by ultrasound provided by the first embodiment of the present invention.
FIG. 5 is the fifth block diagram of the device for producing atomized ozonated water by ultrasound provided by the first embodiment of the present invention.
FIG. 6 is the flow chart of the method for producing atomized ozonated water by ultrasound provided by the second embodiment of this invention.

### Legend:

100 - a device for producing atomized ozonated water by ultrasound; 102 - ozone generator; 104 - ultrasonic atomizer; 106 - first pipeline; 108 - first water supply device; 110 - second pipeline; 112 - second water supply device; 114 - third pipeline; 116 - pressurizing device; 118 - fourth pipeline; 120 - reaction chamber; 122 - fifth pipeline; 124 - spraying device; 126 - sixth pipeline.

### Detailed Implementation

To illustrate the objectives, technical solutions, and advantages of the embodiments of the present invention more clearly, a clear and complete description of the technical solutions in the embodiments of the present invention is set out below, accompanied by drawings of the embodiments of the present invention. Obviously, the embodiments described are only some but not all embodiments of the present invention. Components of embodiments of the present invention described and shown in these drawings can generally be arranged and designed by different configurations.

Accordingly, the detailed description of the embodiments of the present invention below is not intended to limit the scope of protection claimed for the present invention, but merely illustrates the selected embodiments of the present invention. Based on the embodiments of the present invention, all other embodiments obtained by ordinary persons skilled in the art without input of creative efforts also fall within the scope of protection for the present invention.

It should be noted that like reference numbers and letters refer to the like items in the following drawings. Therefore, once an item is defined in one drawing, it does not need to be further defined and explained in subsequent drawings.

In the description of the present invention, it should be noted that terms indicating orientation or position relationship, such as "center", "on", "below", "left", "right", "vertical", "horizontal", "inside", "outside", etc., are based on the orientation or position relationship shown in the drawings, or the habitual orientation or position relationship in using a product of the present invention. Such terms are only used for convenience in describing the present invention and simplifying the description instead of indicating or implying that the device or component must be set in a particular orientation or constructed and operated in a particular orientation, and thus shall not be construed as a limitation on the present invention. In addition, the terms "first", "second", "third", etc. are merely used to make a distinction and shall not be construed as indicating or implying the relative importance.

In addition, the terms "horizontal", "vertical", "overhang" and the like do not mean that components should be absolutely horizontal or vertical; they can be tilted slightly. For example, "horizontal" simply means its direction is more horizontal than "vertical". It does not mean that the structure must be completely horizontal; it can be tilted slightly.

In the description of the present invention, it should also be noted that the terms "configured", "installed", and "connected", etc., shall be broadly construed. For example, it can be a fixed connection, a detachable connection or an integrated connection. It can also be a mechanical connection or electrical connection. It can be connected either directly or indirectly through an intermediate medium, or internally connected between two components. Ordinary persons skilled in the art can understand the specific meaning of the above terms in the present invention according to the particular circumstances.

After long-term research and extensive practice, the inventors found that water mist has the functions of removing dust, lowering temperature, increasing humidity, and dissolving chemical gases, etc. It can be used for air cleansing and purification. Ozone is a naturally-occurring gas. In addition to the ozone layer, which filters ultraviolet light from the sun and protects life on Earth, ozone generated after storms can also refresh the air. Ozone is a refreshing and cleansing element in nature. It can be widely used in disinfection, deodorization, sterilization, decomposition of VOC and toxic gases. However, there are many limitations in the application of ozone gas. For example, the concentration of ozone should not exceed 0.05 ppm in any space with human activities. Ozonated water is produced by dissolving ozone into water by scientific technology to increase the ORP value in water. Generally, the ORP value can reach 650-700m Volt when ozone is dissolved in water. It can be used for drinking water disinfection. When the ORP value of ozonated water reaches 970-1000m Volt, it can be used for industrial laundry.

Therefore, atomization and ozonated water is a perfect combination as water droplets and water mist can be used for air cleansing, dust adhesion, and chemical gases dissolution. It has a comprehensive cleansing ability, and ozone has strong disinfection, deodorization and oxidation power. It can decompose most toxic gases. When water combines with ozone to form ozonated water and further atomized into atomized ozonated water, it can be widely used for air purification, environmental protection, hygiene improvement, agriculture, animal husbandry and so on.

### First embodiment

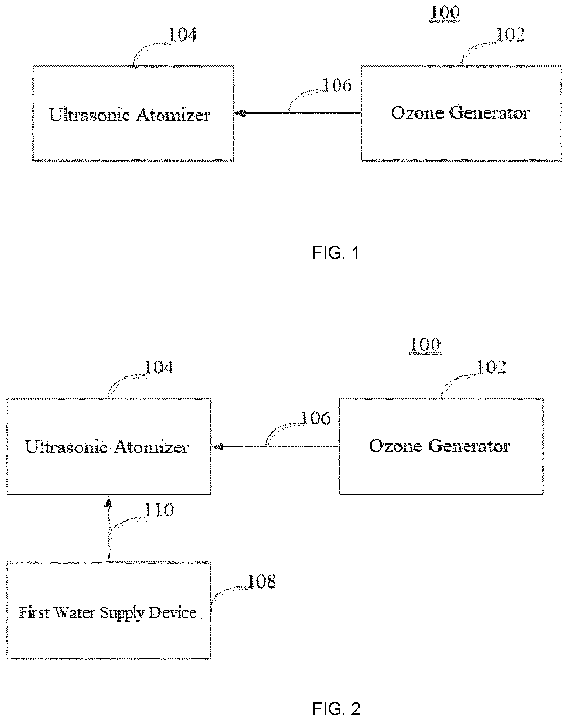

Please refer to FIG. 1. The embodiment provides a device for producing atomized ozonated water by ultrasound (100), which comprises an ozone generator (102), an ultrasonic atomizer (104), and a first pipeline (106). The ozone generator (102) and the ultrasonic atomizer (104) are connected by the first pipeline (106).

As an implementation of the present embodiment, the ozone generator (102) is used to receive air or oxygen and convert the air or oxygen received into ozone. Understandably, as air contains a large amount of impurities such as nitrogen and helium, when the ozone generator (102) receives air and converts it into ozone, the ozone converted will contain a large amount of impurities and affect the purity of ozone. When the ozone generator (102) receives oxygen and converts it into ozone, there will not any impurity. As such, preferably the ozone generator (102) receives oxygen and converts it into ozone. As an approach, the ozone generator (102) and an oxygen generation system are connected by a pipeline. The oxygen generation system converts air into oxygen and then feeds it into the ozone generator (102). The ozone produced by the ozone generator (102) is fed into ultrasonic atomizer (104) through the first pipeline (106).

In the present embodiment, the ultrasonic atomizer (104) is used to either atomize water by ultrasonic technology before it is mixed with the ozone from the ozone generator (102) to form atomized ozonated water, or atomize ozonated water, which is formed by dissolving ozone in water, into atomized ozonated water by ultrasonic technology.

Please refer to FIG. 2. As an implementation of the present embodiment, when the ultrasonic atomizer (104) is used to atomize water by ultrasonic technology before it is mixed with the ozone from the ozone generator (102) to form atomized ozonated water, the device for producing atomized ozonated water by ultrasound (100) also comprises a first water supply device (108) and the second pipeline (110). In particular, the first water supply device (108) and ultrasonic atomizer (104) are connected by the second pipeline (110). The first water supply device (108) is used to supply water to the ultrasonic atomizer (104), such that the water from the first water supply device (108) is atomized by the ultrasonic atomizer (104) before it is mixed with the ozone from the ozone generator (102) to form atomized ozonated water.

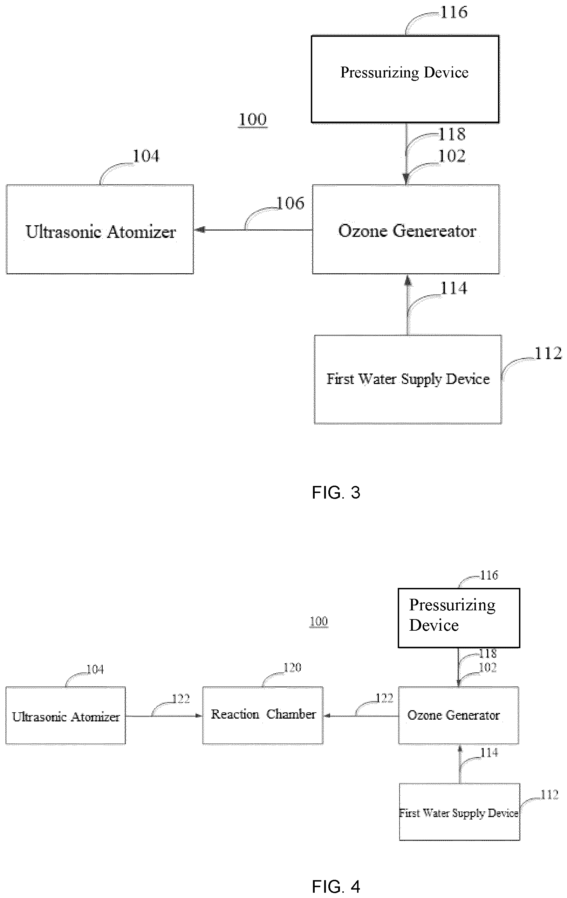

Please refer to FIG. 3. As another implementation of the present embodiment, when the ultrasonic atomizer (104) is used to atomize ozonated water, which is formed by dissolving ozone in water, to form atomized ozonated water by ultrasonic technology, the device for producing atomized ozonated water by ultrasound (100) also comprises a second water supply device (112) and a third pipeline (114). In particular, the second water supply device (112) and the ozone generator (102) are connected by a third pipeline (114). The second water supply device (112) is used to supply water to the ozone generator (102), such that ozone is dissolved in the water from the second water supply device (112) to form ozonated water, and then atomized by the ultrasonic atomizer (104) to form atomized ozonated water. Ozonated water can be produced by electrolysis of ozone. In that case, the ozone generator (102) is an electrolytic ozone generator. Water is fed into the electrolytic ozone generator to produce ozonated water, and the ozonated water is fed into the ultrasonic atomizer (104) to form atomized ozonated water by ultrasonic technology. Ozonated water can also be produced by corona discharge of ozone and the use of an ejector. In that case, the ozone generator (102) is a corona discharge ozone generator. Water is injected into an ejector or an ejection pump and connected with a corona discharge ozone generator to produce high concentration ozone. After ozone is mixed in the ejector or ejection pump, ozonated water is produced. The ozonated water is then fed into the ultrasonic atomizer (104) to form atomized ozonated water by ultrasonic technology.

Please refer again to FIG. 3. Furthermore, the device for producing atomized ozonated water by ultrasound (100) also comprises a pressurizing device (116) and a fourth pipeline (114). In particular, the pressurizing device (116) and the ozone generator (102) are connected by the forth pipeline (114). Understandably, the pressurizing device can increase air pressure in the ozone generator (102), such that compressed ozone is formed inside the ozone generator (102), thereby causing ozone to be fed into the ultrasonic atomizer (104) to form atomized ozonated water by the ultrasonic atomizer (104). Alternatively, the pressurizing device (116) can also increase the air pressure in the ozone generator (102), such that the ozonated water in the ozone generator (102) is fed into the ultrasonic atomizer (104) to form atomized ozonated water by the ultrasonic atomizer (104).

Please refer to FIG. 4. As an implementation of the present embodiment, the device for producing atomized ozonated water by ultrasound (100) also comprises a reaction chamber (120) and a fifth pipeline (122). The reaction chamber (120) is connected with the ultrasonic atomizer (104) and the ozone generator (102) by the fifth pipeline (122). The reaction chamber (120) is used to provide a space for the ultrasonic atomizer (104) to atomize ozone. Understandably, the reaction chamber (120) can be used to hold the water for the reaction. The water in the reaction chamber (120) can be atomized by the ultrasonic atomizer (104) and mixed with the ozone from the ozone generator (102) to form atomized ozonated water. Alternatively, the ozone from the ozone generator (102) is first mixed with the water in the reaction chamber (120) to form ozonated water, and then atomized by the ultrasonic atomizer (104) into atomized ozonated water. As an approach of the present embodiment, the reaction chamber (120) can either be configured inside the ultrasonic atomizer (104) or outside the ultrasonic atomizer (104). Preferably, the reaction chamber (120) is configured inside the ultrasonic atomizer (104).

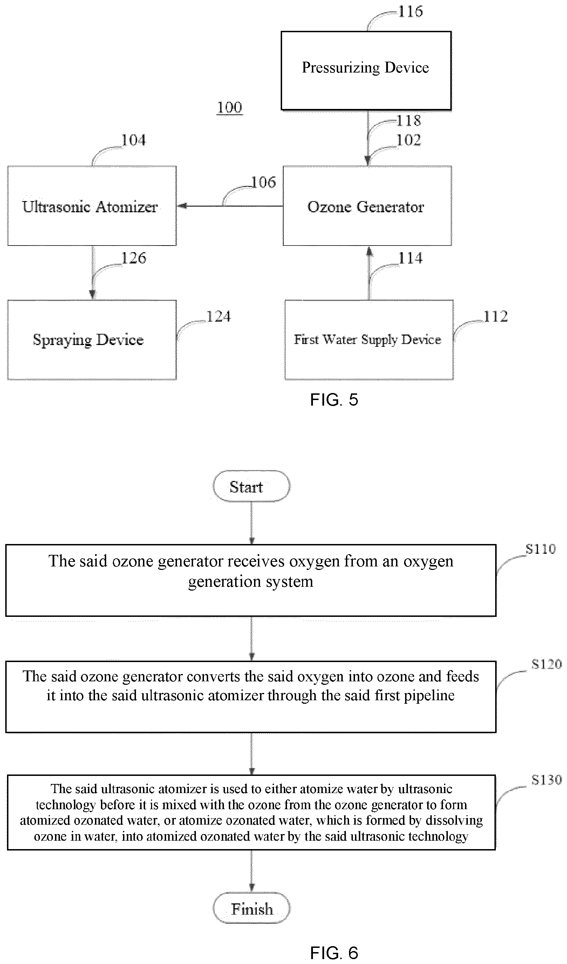

Please refer to FIG. 5. In the present embodiment, the device for producing atomized ozonated water by ultrasound (100) also comprises a spraying device (124) and a sixth pipeline (126). The spraying device (124) and the ultrasonic atomizer (104) are connected by the sixth pipeline (126). The spraying device (124) is used to spray the atomized ozonated water from the ultrasonic atomizer (104) for environmental purification. Understandably, atomized ozonated water can be applied in different types of air purifiers for indoor HVAC deodorization and disinfection, dust and particles removal, and treatment of toxic industrial gases and particles. Atomized ozonated water can also be applied in sprinkler systems. In particular, when atomized ozonated water is used in a sprinkler system, firstly, as the spraying device (124) can directly spray the atomized ozonated water over a large area, it can achieve the purposes of environmental protection and improvement of hygiene. Secondly, as the spraying device (124) can use the atomized ozonated water in farm and greenhouse irrigation and increase humidity, understandably, when atomized ozonated water is used in animal husbandry and food warehouse, it can achieve effective control of environmental hygiene. Usually, when humidity in greenhouse increases, the amount of fungi, bacteria, and even virus also increases. However, there is no such problem with atomized ozonated water, and it can even be used to improve environmental hygiene, sterilization and deodorization, and reducing epidemic and diseases in plants and animals. When the concentration of ozonated water is increased to over 4ppm, it can be used as pesticide, which helps to reduce dependence on pesticides and fungicides and increase the product yield.

As an approach, the spraying device (124) can be a fix-mounted spraying device or a mobile pipes-spraying device. In particular, a pipes-spraying device or a mobile pipes-spraying device creates an atomized ozonated water shield for large area environmental and sanitation management, such as sewage treatment plant and landfill deodorization and sterilization. When the spraying device (124) is a fix-mounted spraying device, the spraying device (124) can be directly installed in a designated area, such as landfill, sewage treatment plant, incinerator, and various polluting industries and so on for odor and air pollution control. When the spraying device (124) is a mobile pipes-spraying device, a pointer type and a translation type mobile piles-spraying device are included to operate with a mechanical system to perform a back-and-forth spraying or a rotary spraying. The spraying device (124) can usually be applied in agricultural irrigation or hygiene control in animal husbandry.

Furthermore, the device for producing atomizing ozonated water by ultrasound (100) also comprises an ultraviolet lamp. The ultraviolet lamp is configured on the outside of the ultrasonic atomizer (104) to produce ultraviolet light, which reacts with atomized ozonated water to produce hydroxyl radicals for decomposition of toxic substances. Understandably, when atomized ozonated water reacts with ultraviolet light, hydroxyl radicals are produced, which can effectively decompose the VOC and other toxic substances in the air, such as pesticide or dioxin from incineration, thus achieving the result of air purification.

Furthermore, the device for producing atomizing ozonated water by high pressure (100) also comprises a cooling device. The cooling device is configured inside the ultrasonic atomizer (104). The cooling device is used to cool down the water or ozonated water. Understandably, cooling the water to be used for atomization (to below 15 degrees Celsius) before atomization is more favorable for dissolution of ozone in water. Besides, low temperature ozone water mist produced from low temperature water can effectively and directly cool down the air.

By using the ozone generator (102) to receive oxygen from an oxygen generation system, convert the oxygen into ozone, and feed the ozone into the ultrasonic atomizer (104) through a first pipeline (106); and by using the ultrasonic atomizer (104) either to atomize water by ultrasonic technology before it is mixed with the ozone from the ozone generator (102) to form atomized ozonated water, or atomize ozonated water, which is formed by dissolving ozone in water, into atomized ozonated water by ultrasonic technology, the device for producing atomized ozonated water by ultrasound (100) provided by the first embodiment of the present invention provides a cleansing element for air purification, dissolution of chemical gases and assurance of environmental hygiene.

### Second embodiment

Please refer to FIG. 6. FIG. 6 is a schematic flow chart of a method for producing atomized ozonated water by ultrasound provided by the second embodiment of the present invention. The process shown in FIG. 6 is explained below. The method is used in the device for producing atomized ozonated water by ultrasound (100). It comprises an ozone generator (102), an ultrasonic atomizer (104), and a first pipeline (106). The ozone generator (102) and ultrasonic atomizer (104) are connected by the first pipeline (106). The method comprises:
Step S110: The said ozone generator receiving oxygen from an oxygen generation system.
Step S120: The said ozone generator converting the said oxygen into ozone and feeding it into the said ultrasonic atomizer through the said first pipeline.
Step S130: The said ultrasonic atomizer either atomizing water by ultrasonic technology before it is mixed with the ozone from the said ozone generator to form atomized ozonated water, or atomizing ozonated water, which is formed by dissolving ozone in water, into atomized ozonated water by the said ultrasonic technology.

The second embodiment of the present invention provides a method for producing atomized ozonated water by ultrasound. Firstly, the ozone generator receives oxygen from an oxygen generation system. Then the oxygen is converted into ozone and fed into the ultrasonic atomizer through a first pipeline. Finally, the ultrasonic atomizer is used to either atomize water by ultrasonic technology before it is mixed with the ozone from the ozone generator to form atomized ozonated water, or atomize ozonated water, which is formed by dissolving ozone in water, to form atomized ozonated water by ultrasonic technology, thereby providing a cleansing element for air purification, dissolution of chemical gases and assurance of environmental hygiene.

In summary, the device and the method for producing atomized ozonated water by ultrasound provided by the embodiments of the present invention comprises an ozone generator, an ultrasonic atomizer, and a first pipeline. The ozone generator and ultrasonic atomizer are connected by the first pipeline. By using the ozone generator to receive oxygen from an oxygen generation system and converting it into ozone, and then feeding it to the ultrasonic atomizer through the first pipeline, and by using the ultrasonic atomizer either to atomize water by ultrasonic technology and then mix it with the ozone from the ozone generator to form atomized ozonated water, or to atomize ozonated water, which is formed by dissolving ozone in water, into atomized ozonated water, a cleansing element is provided for air purification, dissolution of chemical gases and assurance of environmental hygiene.

The above embodiments are only some preferred embodiments of the present invention but are not intended to limit the present invention. For persons skilled in the art, there may be various modifications and changes to the present invention. Any modification, equivalent replacement or improvement within the spirits and principles of the present invention should be included within the scope of protection of the present invention.

## Claims

1. A device for producing atomized ozonated water by ultrasound, **characterized by** comprising an ozone generator, an ultrasonic atomizer, and a first pipeline. The said ozone generator and the said ultrasonic atomizer are connected by the said first pipeline.
The said ozone generator is used to receive oxygen from an oxygen generation system and convert the said oxygen into ozone, and then feed the said ozone into the said ultrasonic atomizer through the said first pipeline.
The said ultrasonic atomizer is used to either atomize water by ultrasonic technology before it is mixed with the ozone from the said ozone generator to form atomized ozonated water, or atomize ozonated water, which is formed by dissolving ozone in water, to form atomized ozonated water by ultrasonic technology.

2. The said device for producing atomized ozonated water by ultrasound according to Claim 1 is **characterized by** comprising a first water supply device and a second pipeline. The said first water supply device and the said ultrasonic atomizer are connected by the second pipeline. The said first water supply device is used to supply water to the said ultrasonic atomizer, such that the said water is atomized by the said ultrasonic atomizer before it is mixed with the ozone from the said ozone generator to form atomized ozonated water.

3. The said device for producing atomized ozonated water by ultrasound according to Claim 1 is **characterized by** comprising a second water supply device and a third pipeline. The said second water supply device and the said ozone generator are connected by the said third pipeline. The said second water supply device is used to supply water to the said ozone generator, such that the said ozone dissolves in the said water to form ozonated water and then atomized by the said ultrasonic atomizer to form atomized ozonated water.

4. The said device for producing atomized ozonated water by ultrasound according to Claim 1 is **characterized by** comprising a pressurizing device and a fourth pipeline. The said pressurizing device and the said ozone generator are connected by the said fourth pipeline. The pressurizing device is used to increase pressure in the said ozone generator, such that the said ozone is fed into the said ultrasonic atomizer to form atomized ozonated water by the said ultrasonic atom izer.

5. The said device for producing atomized ozonated water by ultrasound according to Claim 1 is **characterized by** comprising a reaction chamber and a fifth pipeline. The said reaction chamber is connected with the said ultrasonic atomizer and the said ozone generator by the fifth pipeline. The said reaction chamber provides a space for the said ultrasonic atomizer to atomize the said ozone.

6. The said device for producing atomized ozonated water by ultrasound according to Claim 1 is **characterized by** comprising a spraying device and a sixth pipeline. The said spraying device and the said ultrasonic atomizer are connected by the said sixth pipeline. The said spraying device is used to spray the atomized ozonated water from the said ultrasonic atomizer for environmental purification.

7. The said device for producing atomized ozonated water by ultrasound according to Claim 6 is **characterized by** comprising a fix-mounted spraying device or a mobile pipes-spraying device.

8. The said device for producing atomized ozonated water by ultrasound according to Claim 1 is **characterized by** comprising an ultraviolet lamp. The said ultraviolet lamp is configured on the outside of the said ultrasonic atomizer to produce ultraviolet light, which reacts with the said atomized ozonated water to produce hydroxyl radicals for decomposition of toxic substances.

9. The said device for producing atomized ozonated water by ultrasound according to Claim 1 is **characterized by** comprising a cooling device. The said cooling device is configured inside the said ultrasonic atomizer. The said cooling device is used to cool down the said water or the said ozonated water.

10. A method for producing atomized ozonated water by ultrasound, which is **characterized by** being applied in a device for producing atomized ozonated water by ultrasound. The said device for producing atomized ozonated water by ultrasound comprises an ozone generator, an ultrasonic atomizer, and a first pipeline. The said ozone generator and the said ultrasonic atomizer are connected by the said first pipeline. The said method comprises:
The said ozone generator receiving oxygen from an oxygen generation system;
The said ozone generator converting the said oxygen into ozone and feeding it into the said ultrasonic atomizer through the said first pipeline;
The said ultrasonic atomizer atomizing water by ultrasonic technology before it is mixed with the said ozone from the said ozone generator to form atomized ozonated water;
Alternatively, the said ultrasonic atomizer atomizing ozonated water, which is formed by dissolving ozone in water, to form atomized ozonated water by ultrasonic technology.
